Europäisches Patentamt

European Patent Office

Office européen des brevets

(11) Veröffentlichungsnummer: **0 309 444**
**A2**

## EUROPÄISCHE PATENTANMELDUNG

(21) Anmeldenummer: **88890248.3**

(22) Anmeldetag: **26.09.88**

(51) Int. Cl.⁴: **B 23 Q 7/10**
**B 65 D 19/44**

(30) Priorität: **25.09.87 AT 2439/87**

(43) Veröffentlichungstag der Anmeldung:
**29.03.89 Patentblatt 89/13**

(84) Benannte Vertragsstaaten: **CH DE GB IT LI**

(71) Anmelder: **MASCHINENFABRIK HEID**
**AKTIENGESELLSCHAFT**
**Ernstbrunner Strasse 31-33**
**A-2000 Stockerau (AT)**

(72) Erfinder: **Holy, Franz**
**Dr. Adolf Schärfstrasse 3**
**A-2000 Stockerau (AT)**

(74) Vertreter: **Müllner, Erwin, Dr. et al**
**Patentanwälte Dr. Erwin Müllner Dipl.-Ing. Werner**
**Katschinka Postfach 159 Weihburggasse 9**
**A-1010 Wien (AT)**

(54) Palette zur Bereitstellung, zur Aufnahme und zum Transport von Werkstücken.

(57) Eine Palette zur Bereitstellung, Aufnahme und zum Transport von Werkstücken (12, 14) im Zuge der Bearbeitung auf automatisierten Produktionsanlagen umfaßt einen Grundrahmen (1) und darauf parallel zueinander paarweise angeordnete, verschiebbare Halteleisten (6, 7; 6′, 7′, 6″, 7″; 6‴, 7‴). Ein Verstellantrieb greift an den Halteleisten an und ermöglicht die Anpassung an verschiedene Werkstückdurchmesser durch Veränderung des Abstandes innerhalb eines Halteleistenpaares, wobei die Mittellinien (11, 11′, 11″, 11‴) jedes Halteleistenpaares (6, 7; 6′, 7′; 6″, 7″; 6‴, 7‴) ortsfest bleiben. Als Verstellantrieb kann eine Spindel (3) mit einem Links- und einem daran anschließenden Rechtsgewinde (3′,3″) vorgesehen sein, wobei eine Halteleiste (6) eines Paares von Halteleisten (6, 7) auf dem Linksgewinde (3′) und die andere auf dem Rechtsgewinde (3″) verfahrbar gelagert ist. Alle linken und alle rechten Halteleisten können miteinander verbunden sein und folgen somit der Verstellbewegung.

Fig. 2

EP 0 309 444 A2

**Beschreibung**

## Palette zur Bereitstellung, zur Aufnahme und zum Transport von Werkstücken

Die Erfindung betrifft eine Palette zur Bereitstellung, zur Aufnahme und zum Transport von Werkstücken im Zuge der Bearbeitung auf automatisierten Produktionsanlagen, mit einem Grundrahmen und mit parallelen Halteleisten, gegebenenfalls mit Backen oder Auflageschrägen, zwischen welchen die Werkstücke in Reihen gehalten sind.

Derartige Produktionsanlagen verfügen über Lade- und Entladeeinrichtungen mit Greifern, die aus Paletten Rohlinge bzw. Werkstücke entnehmen, einer Bearbeitung zuführen und sodann wieder in der Palette ablegen. Die Werkstücke müssen auf der Palette geordnet nach einem System (Koordinatensystem bzw. Rastermaß) bereitgestellt sein, damit im Zuge der Programmsteuerung ein Zugriff durch die Ladeeinrichtung wie auch ein Ablegen möglich ist. Dabei ist es besonders zweckmäßig, wenn unabhängig vom Werkstückdurchmesser die Mittelachse eines Futterteiles auf einer Palette ortsfest bleibt, sodaß der Greifer genau definierte Positionen anfahren kann.

Es sind Paletten bekannt, deren Rechteckrahmen eine Lochplatte als Bodenplatte zum Aufstecken von Backen oder Halterungen für die Werkstücke aufweist. Das Vorrichten dieser Paletten ist in höchstem Maße zeitaufwendig und erfordert genaues Arbeiten. Die aufgesteckten Backen sind meist nicht sehr fest fixierbar und können bei Erschütterungen leicht herausfallen. Darüber hinaus ist eine stufenlose Einstellung nicht möglich. Ziel der bekannten Baukastensysteme ist es, möglichst wandelbar und daher vielseitig verwendbar zu sein. Dabei hat sich herausgestellt, daß Systeme, die über Klemmleistenpaare verfügen, von welchen jeweils eine starr fixiert und die jeweils andere in einem Lochraster versetzbar angeordnet ist, in der Praxis stabiler sind und kaum Anlaß zu Fehleinstellungen geben. Diese halbflexiblen Systeme sind zudem auch preisgünstiger als vollflexible Systeme. Als nachteilig wird angesehen, daß die Werstückmittelachsen nicht unabhängig vom Außendurchmesser relativ zur Palette ortsfest bleiben, sodaß bei Veränderung der Paletteneinstellung auch die Mittelpunkte wandern und daher die Programmierung des Greifers verändert und den neuen Mittelachsenpositionen angepaßt werden muß. Aus der DE-OS 3 035 657 ist ein Bearbeitungsmagazin bekannt, bei welchem die Werkstücke jeweils durch Halteleisten

Die Erfindung betrifft eine Palette zur Bereitstellung, zur Aufnahme und zum Transport von Werkstücken im Zuge der Bearbeitung auf automatisierten Produktionsanlagen, mit einem Grundrahmen und mit parallelen Halteleisten, gegebenenfalls mit Backen oder Auflageschrägen, zwischen welchen die Werkstücke in Reihen gehalten sind.

Derartige Produktionsanlagen verfügen über Lade- und Entladeeinrichtungen mit Greifern, die aus Paletten Rohlinge bzw. Werkstücke entnehmen, einer Bearbeitung zuführen und sodann wieder in der Palette ablegen. Die Werkstücke müssen auf der Palette geordnet nach einem System (Koordinatensystem bzw. Rastermaß) bereitgestellt sein, damit im Zuge der Programmsteuerung ein Zugriff durch die Ladeeinrichtung wie auch ein Ablegen möglich ist. Dabei ist es besonders zweckmäßig, wenn unabhängig vom Werkstückdurchmesser die Mittelachse eines Futterteiles auf einer Palette ortsfest bleibt, sodaß der Greifer genau definierte Positionen anfahren kann.

Es sind Paletten bekannt, deren Rechteckrahmen eine Lochplatte als Bodenplatte zum Aufstecken von Backen oder Halterungen für die Werkstücke aufweist. Das Vorrichten dieser Paletten ist in höchstem Maße zeitaufwendig und erfordert genaues Arbeiten. Die aufgesteckten Backen sind meist nicht sehr fest fixierbar und können bei Erschütterungen leicht herausfallen. Darüber hinaus ist eine stufenlose Einstellung nicht möglich. Ziel der bekannten Baukastensysteme ist es, möglichst wandelbar und daher vielseitig verwendbar zu sein. Dabei hat sich herausgestellt, daß Systeme, die über Klemmleistenpaare verfügen, von welchen jeweils eine starr fixiert und die jeweils andere in einem Lochraster versetzbar angeordnet ist, in der Praxis stabiler sind und kaum Anlaß zu Fehleinstellungen geben. Diese halbflexiblen Systeme sind zudem auch preisgünstiger als vollflexible Systeme. Als nachteilig wird angesehen, daß die Werstückmittelachsen nicht unabhängig vom Außendurchmesser relativ zur Palette ortsfest bleiben, sodaß bei Veränderung der Paletteneinstellung auch die Mittelpunkte wandern und daher die Programmierung des Greifers verändert und den neuen Mittelachsenpositionen angepaßt werden muß. Aus der DE-OS 3 035 657 ist ein Bearbeitungsmagazin bekannt, bei welchem die Werkstücke jeweils durch Halteleisten voneinander getrennt sind. Beim Einspannen der Werkstücke werden diese zusammengeschoben, sodaß sich die jeweilige Lage eines Werkstückes in Abhängigkeit von seinem Durchmesser verändert. Ein vom Werkstück unabhängiger positionsfester Zugriff durch eine Lade-oder Entladeeinrichtung ist somit nicht möglich.

Die Erfindung zielt darauf ab, eine flexibel einsetzbare Palette der eingangs beschriebenen Art zu schaffen, die unter Beibehaltung der Werkstückmittelachsenpositionen leicht verstellbare Werkstückaufnahmen aufweist. Dies wird dadurch erreicht, daß für jede Reihe von Werkstücken jeweils ein Paar von einander gegenüberliegenden Halteleisten vorgesehen und die beiden Halteleisten eines jeden Paares mittels eines Verstellantriebes, insbesondere mit Hilfe mindestens einer an sich bekannten Spindel mit Links- und Rechtsgewinde, bezüglich der Mittelachse der Werkstückreihe zentrisch zueinander bzw. auseinander verschiebbar sind. Die Halteleisten, welche durch Backen oder andere werkstückspezifische Halteteile dem Werkstück (Futterteil, Wellenteil) anpaßbar sind, werden paarweise zueinander verstellt, sodaß die Werkstückmittelachsen durchmesserunabhängig stets ortsfest bleiben. Durch den gemeinsamen Verstellantrieb werden sämtliche Werkstückaufnahmen auf einer Palette gleichzeitig verstellt. Dadurch ist die Palette besonders leicht und schnell auf unterschiedliche Werkstücke einstellbar und Fehlpositionierungen, die zu Havarien des Greifers führen können, sind ausgeschlossen. Besonders zweckmäßig ist es, wenn alle jeweils linken Halteleisten, wie auch alle jeweils rechten Halteleisten der einander gegenüberliegenden Halteleistenpaare miteinander beispielsweise durch Schienen in starrer Verbindung stehen und die Spindel bzw. Spindeln auf ihren Linksgewinden und auf ihren Rechtsgewinden je eine Mutter tragen, von welchen die eine mit einer linken und die andere mit einer rechten Halteleiste verbunden ist. Zwei gitterrostartige, die Halteleisten umfassenden Rahmen sind somit innerhalb des Grundrahmens bzw. auf diesem durch den Spindeltrieb gegeneinander verschiebbar. Die Konstruktion ermöglicht nicht nur ein einfaches gleichzeitiges Verstellen aller Werkzeugaufnahmetaschen auf der Palette sondern es ergibt sich durch die beiden großflächigen und gegeneinander verschiebbaren Baueinheiten mit den Halteleisten eine gute Führung, die ein Verkanten der Halteleisten bei der Verschiebung mit Sicherheit verhindert. Es können zwei Spindeln, jeweils mit einem Linksgewinde und daran anschließend mit einem Rechtsgewinde, im Abstand nebeneinander angeordnet und durch eine Kette miteinander in Verbindung stehen, sodaß die Einstellung nur an einer Spindel z.B. mit Hilfe eines Steckschlüssels vorgenommen werden muß. Die Spindel bzw. Spindeln sind in zweckmäßiger Weise im Grundrahmen in axialer Richtung unverschiebbar gelagert.

Ein Ausführungsbeispiel des Erfindungsgegenstandes ist in den Zeichnungen dargestellt. Fig. 1 zeigt eine Draufsicht auf eine Palette für Futterteile gemäß der Erfindung. Fig. 2 einen Schrägriß einer solchen Palette und Fig. 3 eine Palette, teilweise im Längsschnitt.

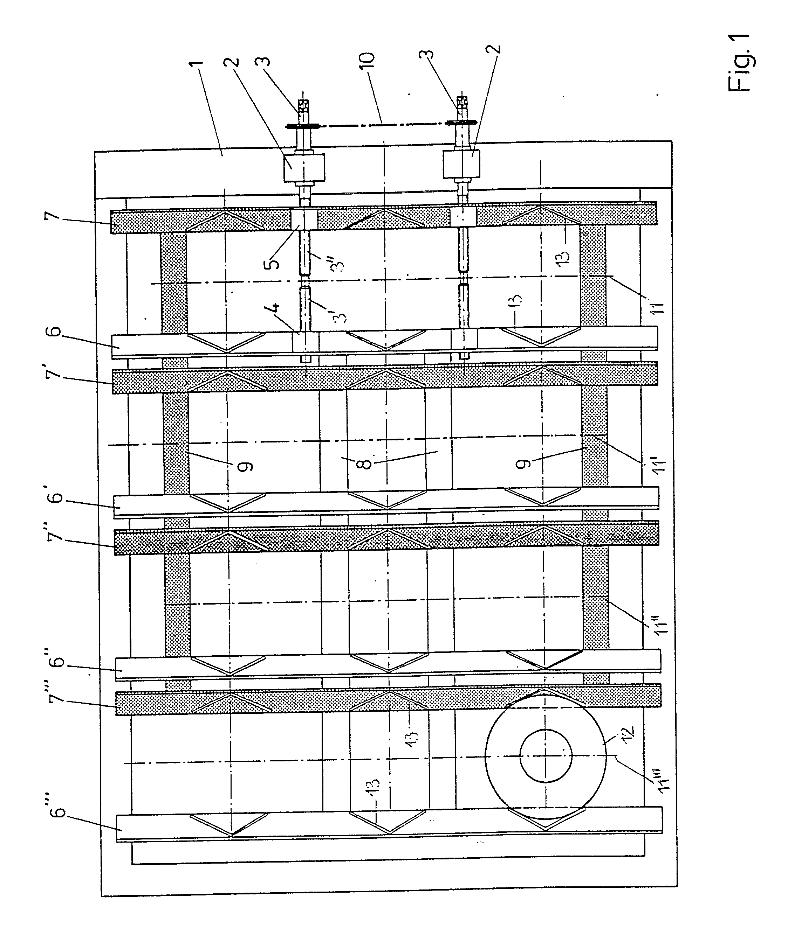

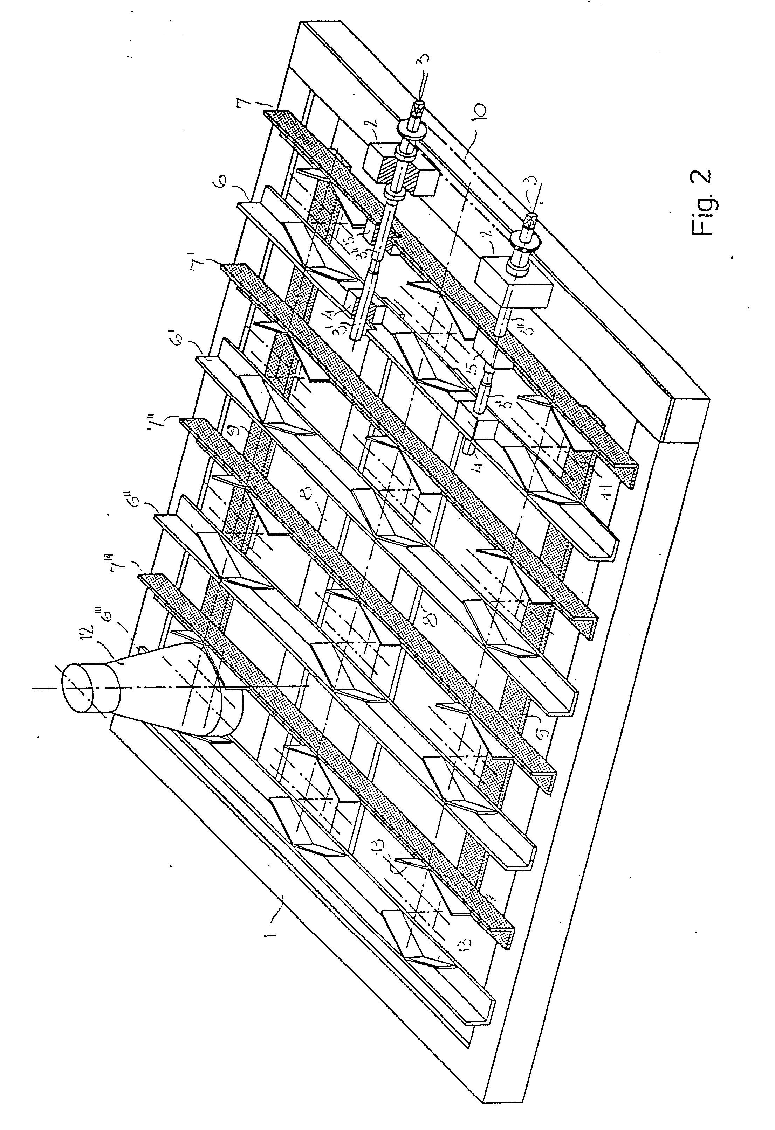

Gemäß Fig. 1 und 2 sind auf einem Grundrahmen 1 Lager 2 für zwei parallel zueinander angeordnete Spindeln 3 vorgesehen. In den Lagern 2 sind die Spindeln 3 drehbar jedoch axial unverschiebbar gelagert. Die Spindeln 3 verfügen jeweils über ein Linksgewinde 3′ und ein daran anschließendes Rechtsgewinde 3″. Auf diesen Gewindestücken laufen Muttern 4 und 5, die auf Halteleisten 6, 7 befestigt sind. Bei synchroner Drehung der beiden Spindeln 2 (wenn sie etwa mittels einer Kette 10 auf Kettenrädern verbunden sind) laufen die Halteleisten 6, 7 je nach Drehrichtung zueinander oder auseinander. Die beiden Halteleisten 6, 7 bilden ein Paar. Es sind auf dem Grundrahmen 1 mehrere solcher Halteleistenpaare 6′, 7′; 6″, 7″; 6‴, 7‴ vorgesehen. Jeweils die linken Halteleisten 6, 6′, 6″, 6‴ stehen durch Schienen 8 und jeweils die rechten Halteleisten 7, 7′, 7″, 7‴ durch Schienen 9 miteinander in starrer Verbindung, sodaß sich zwei in gleicher Ebene ineinandergreifende Gitterrahmen aus Halteleisten ergeben. Diese beiden Gitterrahmen werden durch die beiden Spindeln 3 so gegeneinander verstellt, daß die Mittellinien 11, 11′, 11″, 11‴ zwischen den Halteleistenpaaren (6, 7; 6′, 7′; 6″, 7″; 6‴, 7‴) ortsfest bleiben.

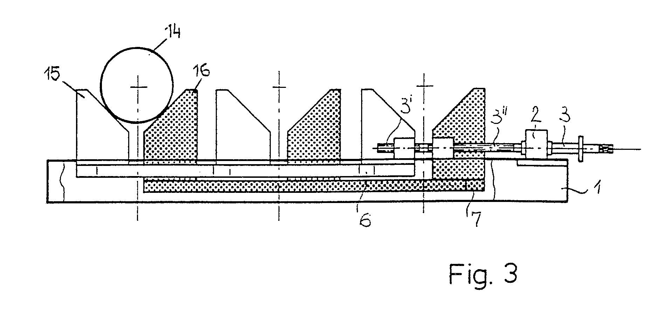

Auf den Halteleisten sind zur Aufnahme von Futterteilen 12 Backen 13 vorgesehen. Für Wellenteile 14 werden Auflagerstücke 15, 16 mit Auflagerschrägen (Fig. 3) paarweise verwendet, die auf den Halteleisten befestigt sind. Wie bekannt, können die auf den Halteleisten erforderlichen Backen, Auflagerstücke od. dgl. auswechselbar bzw. steckbar, angeordnet sein.

Die Positionen der Werkstücke auf der Palette bleiben unabhängig vom Werkstückdurchmesser immer gleich, weil die Mittellinien parallel zu den beiden Koordinatenrichtungen auch bei Verstellung der Abstände mittels der Spindeln 3 ortsfest sind.

## Patentansprüche

1. Palette zur Bereitstellung, zur Aufnahme und zum Transport von Werkstücken im Zuge der Bearbeitung auf automatisierten Produktionsanlagen, mit einem Grundrahmen und mit parallelen Halteleisten, gegebenenfalls mit Bakken oder Auflageschrägen, zwischen welchen die Werkstücke in Reihen gehalten sind, dadurch gekennzeichnet, daß für jede Reihe von Werkstücken jeweils ein Paar von einander gegenüberliegenden Halteleisten (6, 7; 6′, 7′; 6″, 7″; 6‴, 7‴) vorgesehen und die beiden Halteleisten eines jeden Paares mittels eines Verstellantriebes, insbesondere mit Hilfe mindestens einer an sich bekannten Spindel (3) mit Links- und Rechtsgewinde (3′, 3″), bezüglich der Mittelachse der Werkstückreihe zentrisch zueinander bzw. auseinander verschiebbar sind.

2. Palette nach Anspruch 1, dadurch gekennzeichnet, daß alle jeweils linken Halteleisten (6, 6′, 6″, 6‴), wie auch alle jeweils rechten Halteleisten (7, 7′, 7″, 7‴) der einander gegenüberliegenden Haltenleistenpaare (6, 7; 6′, 7′; 6″, 7″; 6‴, 7‴) miteinander beispielsweise durch Schienen (8, 9) in starrer Verbindung stehen und die Spindel bzw. Spindeln (3) auf ihren Linksgewinden (3′) und auf ihren Rechtsgewinden (3″) je eine Mutter (4, 5) tragen, von welchen die eine mit einer linken und die andere mit einer rechten Halteleiste (6, 7) verbunden ist.

3. Palette nach Anspruch 2, dadurch gekennzeichnet, daß die Spindel bzw. Spindeln (3) im Grundrahmen in axialer Richtung unverschiebbar gelagert sind (Lager 2).

4. Palette nach einem der Ansprüche 1 bis 3, dadurch gekennzeichnet, daß bei Anordnung von mehreren Spindeln (3) zur Verstellung der Halteleisten (6, 7; 6′, 7′; 6″, 7″; 6‴, 7‴) die Spindeln (3) miteinander kinematisch, beispielsweise durch eine Kette (10), einen Zahnriemen od.dgl. verbunden sind.

Fig. 1

EP 0 309 444 A2

Fig. 2

Fig. 3